# FASCICULE DE BREVET EUROPEEN

(11) **EP 2 956 416 B1**
(45) Date de publication et mention de la délivrance du brevet: **12.09.2018**
(21) Numéro de dépôt: 14709730.7
(22) Date de dépôt: 12.02.2014
(51) Int. Cl.: F23D 14/32, C03B 5/235, C03B 5/237, F23D 14/66, F23L 15/00, F23L 15/04, F28D 7/16, F28D 21/00

(54) **INSTALLATION AVEC UN FOUR AYANT UN ÉCHANGEUR EXTERNE RÉCUPÉRATIF DE CHALEUR, ET PROCÉDÉ DE COMBUSTION AU MOYEN D'UNE TELLE INSTALLATION**
INSTALLATION MIT EINEM OFEN MIT WÄRMERÜCKGEWINNUNGWÄRMETAUSCHER UND VERFAHREN ZUR VERBRENNUNG IN EINER DERARTIGEN INSTALLATION
INSTALLATION WITH A FURNACE WITH AN EXTERNAL HEAT RECOVERY EXCHANGER AND COMBUSTION METHOD USING SUCH AN INSTALLATION

(30) Priorité: 12.02.2013 FR 1351194
(43) Date de publication de la demande: 23.12.2015
(73) Titulaire: L'Air Liquide Société Anonyme pour l'Etude et l'Exploitation des Procédés Georges Claude, 75007 Paris (FR)
(72) Inventeur: CONSTANTIN, Gabriel, F-91190 Gif sur Yvette (FR); LEROUX, Bertrand, F-91650 Breuillet (FR); KALCEVIC, Robert, F-78000 Versailles (FR); TSIAVA, Rémi, F-91250 Saint Germain-les-Corbeil (FR); DUPERRAY, Pascal, F-78180 Montigny le Bretonneux (FR); GRAND, Benoit, F-78000 Versailles (FR)
(74) Mandataire: De Vleeschauwer, Natalie Y.L.D.
(86) Numéro de dépôt international: PCT/FR2014/050275
(87) Numéro de publication internationale: WO 2014/125213

(56) Documents cités:
- EP-A1- 1 995 543
- EP-A1- 2 546 204
- WO-A1-2009/118337

## Description

La présente invention concerne une installation comportant un four comportant entre 4 et 20 oxybrûleurs.

De tels fours sont connus dans l'industrie du verre. On connait notamment de tels fours de fusion de verre et en particulier de tels fours de fusion de verre ayant une capacité entre 20 et 200 tonnes de verre fondu par jour.

Dans ces fours, on génère de la chaleur par combustion d'un combustible avec un oxydant, ledit oxydant étant traditionnellement de l'air.

La puissance de chacun des brûleurs est individuellement ajustée, ou ajustée par groupe de brûleurs, pour établir le profil thermique recherché dans le four. La puissance totale des brûleurs est ajustée en fonction du procédé mis en oeuvre dans le four, et notamment de la tirée du four, par exemple dans le cas d'un four de fusion.

Pour réduire les émissions polluantes (NOx, poussières) et la consommation énergétique des fours, il est connu de remplacer l'air de combustion par de l'oxygène industriel. Dans le présent contexte, on comprend par oxygène industriel un gaz ayant une teneur en oxygène supérieure ou égale à 70%vol. La combustion avec de l'oxygène industriel est généralement appelée « oxycombustion », les brûleurs fonctionnant en « oxycombustion » étant appelés des « oxybrûleurs ».

Pour la mise en oeuvre de l'oxycombustion, il est ainsi connu d'injecter l'oxygène industriel dans le four à température ambiante, c'est-à-dire sans étape de préchauffage en amont du four. Le combustible est alors typiquement également injecté à température ambiante (par exemple quand le combustible est du gaz naturel ou du fioul léger). Dans le cas d'un combustible visqueux (par exemple du fioul lourd), par contre, le combustible est d'abord amené à une température à laquelle la viscosité du combustible est suffisamment réduite afin de permettre son injection aisée dans le four (par exemple à une température de 120°C environ pour du fuel lourd).

Il est aussi connu d'améliorer le bilan économique du four utilisant de l'oxycombustion en préchauffant au moins un des réactifs (oxygène industriel et/ou combustible) en amont des oxybrûleurs.

On connaît essentiellement deux modes de préchauffage des réactifs à partir de fumées chaudes.

On connaît tout d'abord des dispositifs comprenant un échangeur de chaleur qui permet un chauffage direct à travers une paroi du réactif par les fumées chaudes générées par le four. Les documents EP 950 031 et US 5,807,418 décrivent de tels dispositifs.

Cette première solution, bien que d'un coût relativement faible puisqu'elle ne nécessite qu'un seul échangeur de chaleur n'apporte cependant pas toujours un niveau de sécurité suffisant, en particulier pour le préchauffage d'oxygène industriel, étant donné que l'oxygène industriel préchauffé est particulièrement réactif et corrosif. En effet, les fumées contiennent souvent des imbrûlés, soit parce que le procédé nécessite une atmosphère réductrice à l'intérieur du four, soit à cause d'un mauvais fonctionnement des brûleurs. Au cours du temps, le matériau d'un tel échangeur de chaleur peut être endommagé, notamment par érosion/corrosion, du fait du contact avec les fumées et de l'oxygène chauds. Des parties de l'échangeur défectueuses peuvent alors permettre la rencontre de l'oxygène avec ces imbrûlés dans les fumées chaudes et ainsi générer une source d'incendie dont les conséquences seraient désastreuses. Ce qui plus est, selon cette première solution, l'oxygène industriel préchauffé est transporté de l'échangeur de chaleur vers chacun des oxybrûleurs fonctionnant avec de l'oxygène préchauffé, par un réseau de conduits de transport, lesdits conduits de transport étant également susceptibles d'être corrodés par l'oxygène préchauffé qu'ils transportent.

Pour remédier à ce problème, on connaît des dispositifs de préchauffage comprenant un échange de chaleur entre les fumées chaudes et le réactif de combustion en deux étapes, grâce à deux échangeurs de chaleur successifs. Le premier échangeur de chaleur sert à chauffer un fluide intermédiaire, notamment de l'air, à partir des fumées chaudes et le deuxième échangeur de chaleur sert à chauffer le réactif de combustion, en particulier l'oxygène industriel, à partir du fluide intermédiaire précédemment chauffé au moyen du premier échangeur de chaleur. Les documents US 6,071,116 et US 6,250,916 de la demanderesse décrivent de tels dispositifs. Selon cette solution, un deuxième échangeur de chaleur par réactif de combustion à préchauffer est situé directement en amont de chaque brûleur utilisant un réactif préchauffé. Cette deuxième solution est plus sécurisante que la première décrite ci-dessus du fait qu'on choisit un fluide intermédiaire dont la teneur en oxygène est insuffisante pour enflammer les imbrûlés des fumées et qu'on limite à un minimum les conduits véhiculant les réactifs préchauffés, et notamment les conduits véhiculant de l'oxygène industriel préchauffé. Par contre, elle est plus coûteuse du fait du plus grand nombre d'échangeurs de chaleur nécessaires.

Le document EP-A-2546204 de la demanderesse, ainsi que le document WO-A-2009/118337, décrivent des formes de mise en oeuvre particulières de telles installations.

En particulier, le document EP-A-2546204 divulgue les caractéristiques spécifiées dans le préambule de la revendication 1. Le but de la présente invention est de permettre la mise en oeuvre de cette deuxième solution dans des fours comportant entre 4 et 20 oxybrûleurs tout en minimisant l'investissement nécessaire à la récupération de chaleur et le préchauffage de l'oxygène industriel. Un autre but de la présente invention est de permettre une telle mise en oeuvre de cette deuxième solution dans un four de fusion de verre, et en particulier dans un four de fusion de verre ayant une capacité entre 20 et 200 tonnes de verre fondu par jour.

La présente invention concerne en premier lieu une installation comportant un four. Le four comporte une chambre délimitée, d'une part, par une sole et, d'autre part par une enveloppe réfractaire, cette enveloppe comportant des murs et une voûte. La chambre comporte également une sortie de fumées. Le four comporte entre 4 et 20 oxybrûleurs dirigés vers l'intérieur de la chambre. Au moins une première série desdits oxybrûleurs se trouvent dans un premier mur de la chambre et sont alignés selon une direction dite « première direction ».

L'installation comporte également un dispositif de chauffage relié à la sortie de fumées de la chambre. Ce dispositif de chauffage est destiné au chauffage d'un fluide caloporteur au moyen de fumées évacuées de la chambre avec obtention de fluide caloporteur chaud.

Le terme « relié » utilisé dans le présent contexte signifie fluidiquement relié, c'est-à-dire, connecté de manière à permettre le transport d'un fluide entre les deux éléments reliés.

L'installation comporte également un échangeur de chaleur, dit échangeur de chaleur primaire, ou échangeur primaire, et relié au dispositif de chauffage. L'échangeur primaire est destiné au préchauffage d'oxygène industriel par échange thermique à travers une paroi avec le fluide caloporteur chaud de manière à obtenir de l'oxygène industriel préchauffé et comporte au moins une sortie d'oxygène industriel préchauffé pour la fourniture d'oxygène industriel préchauffé à au moins un des oxybrûleurs. L'échangeur primaire de l'installation suivant l'invention est adjacent à l'enveloppe de la chambre et comporte plusieurs sorties d'oxygène industriel préchauffé.

L'installation comporte également un diviseur pour la division de l'oxygène industriel à préchauffer en plusieurs flux d'oxygène à préchauffer, ledit diviseur étant positionné en amont de l'échangeur primaire ou dans une zone d'entrée d'oxygène à l'intérieur de l'échangeur primaire.

Pour la fourniture d'oxygène industriel préchauffé aux oxybrûleurs de la première série, chaque oxybrûleur de cette première série est relié à une sortie de l'échangeur primaire. Aucune sortie de l'échangeur primaire est reliée à plusieurs oxybrûleurs.

En général, chaque sortie de l'échangeur primaire sera ainsi reliée à un oxybrûleur. Quand ledit échangeur primaire est uniquement relié à des oxybrûleurs de la première série, chaque sortie de cet échangeur primaire est typiquement reliée à un oxybrûleur de cette première série. Toutefois, dans certains cas, l'échangeur primaire peut également comporter une sortie supplémentaire pour la fourniture d'un flux d'oxygène industriel préchauffé à un autre équipement de l'installation.

Les avantages de la présente invention sont nombreux. Elle permet de réaliser des économies en combustible et des réductions d'émissions polluantes associées à l'oxycombustion avec de la récupération d'énergie pour le préchauffage de réactifs de combustion en particulier pour le préchauffage de l'oxygène industriel utilisé comme comburant. L'invention présente également le niveau de sécurité élevé associé à la deuxième solution pour le préchauffage des réactifs de combustion au moyen des fumées chaudes. Ce qui plus est, la présente invention permet d'atteindre ce niveau de sécurité élevé avec un minimum d'équipements et en limitant au minimum les conduits pour le transport de l'oxygène industriel préchauffé vers les oxybrûleurs.

L'utilisation d'un échangeur primaire avec plusieurs sorties d'oxygène industrielle permet une grande flexibilité dans la fourniture de multiples flux d'oxygène industriel préchauffé. L'utilisation d'un échangeur primaire avec plusieurs sorties d'oxygène industriel préchauffé présente également l'avantage important de limiter, voir d'éliminer, le besoin de systèmes, et notamment des vannes, pour la répartition d'un flux d'oxygène industriel préchauffé en plusieurs sous-flux. Quand chaque sortie d'oxygène industriel préchauffé est reliée à un seul oxybrûleur, il n'est pas nécessaire de répartir de l'oxygène industriel à l'état préchauffé pour sa distribution vers différents brûleurs. Étant donné la nature particulièrement oxydante et corrosive de l'oxygène industriel chaud, très peu de systèmes sont aptes à répartir des flux d'oxygène chaud de manière fiable et les systèmes existants fiables sont particulièrement onéreux, et une installation fonctionnant sans ou avec un minimum de tels systèmes est donc hautement souhaitable.

Suivant l'invention, un seul échangeur primaire peut générer plusieurs flux d'oxygène industriel préchauffé, grâce au fait que l'oxygène industriel est divisé en plusieurs flux avant d'être préchauffé, c'est-à-dire en amont de l'échangeur primaire ou dans une zone d'entrée d'oxygène à l'intérieur de l'échangeur primaire.

Pour cela, l'installation comprend le diviseur mentionné ci-dessus pour la division de l'oxygène industriel à préchauffer en plusieurs flux d'oxygène à préchauffer positionné en amont de l'échangeur primaire ou dans une zone d'entrée d'oxygène à l'intérieur de l'échangeur primaire.

De préférence le diviseur divise un flux d'oxygène industrielle à préchauffer en un nombre de flux d'oxygène industriel à préchauffer qui correspond au nombre de flux d'oxygène industriel préchauffé fournis par l'échangeur primaire.

Le four comprend de préférence entre 5 et 16 oxybrûleurs, encore de préférence entre 5 et 10 oxybrûleurs.

Une série d'oxybrûleurs comporte par définition plusieurs oxybrûleurs, typiquement au moins 3 oxybrûleurs. Une série comporte avantageusement entre 3 et 8 oxybrûleurs, de préférence entre 3 et 6 oxybrûleurs.

La présente invention est particulièrement intéressante pour des installations comportant un four de fusion de verre et en particulier des fours de fusion avec une capacité ou tirée de 20 à 200 tonnes de verre fondu par jour.

La zone entourant la chambre est généralement à une température plus élevée que la température ambiante. De ce fait, la position de l'échangeur de chaleur primaire adjacente à l'enveloppe de la chambre contribue également à limiter les pertes d'énergie thermique.

Suivant une forme de réalisation de l'invention, l'échangeur de chaleur primaire est adjacent au mur comportant la première série d'oxybrûleurs. Dans ce cas, les sorties d'oxygène industriel préchauffé de l'échangeur de chaleur primaire sont typiquement uniquement reliées aux oxybrûleurs de la première série.

Selon cette forme de réalisation, quand le four de fusion comporte une deuxième série d'oxybrûleurs dans un deuxième mur de la chambre, les oxybrûleurs de cette deuxième série étant alignés selon une direction dite « deuxième direction », l'installation comporte avantageusement un deuxième échangeur de chaleur primaire, du type tel que décrit ci-dessus. Ce deuxième échangeur primaire est également relié au dispositif de chauffage.

Ce deuxième échangeur primaire est alors avantageusement positionné de manière adjacente au deuxième mur qui comporte la deuxième série d'oxybrûleurs avec la dimension longitudinale du deuxième échangeur primaire parallèle à la deuxième direction de cette deuxième série d'oxybrûleurs.

Dans ce cas, les sorties du deuxième échangeur primaire peuvent, de manière utile, être dispersées le long de cette dimension longitudinale du deuxième échangeur primaire. Chaque oxybrûleur de la deuxième série est alors avantageusement relié à la sortie d'oxygène industriel préchauffé du deuxième échangeur primaire le plus proche dudit oxybrûleur, aucune sortie du deuxième échangeur primaire étant reliée à plusieurs oxybrûleurs.

Les sorties d'oxygène industriel préchauffé du deuxième échangeur primaire peuvent être reliées uniquement aux oxybrûleurs de la deuxième série.

Le premier mur de la chambre, dans lequel se trouvent les oxybrûleurs de la première série, est souvent positionné à l'opposé du deuxième mur de la chambre, dans lequel se trouvent les oxybrûleurs de la deuxième série. De préférence, la première direction de la première série et la deuxième direction de la deuxième série sont en substance parallèles.

Suivant une autre forme de réalisation de l'invention, l'échangeur de chaleur primaire est positionné au-dessus de et adjacent à la voûte de la chambre.

Notamment quand, suivant cette deuxième forme de réalisation avec un échangeur primaire au-dessus de la voûte, le four comporte une deuxième série d'oxybrûleurs alignés selon une deuxième direction dans un deuxième mur de la chambre situé à l'opposé du premier mur, chaque oxybrûleur de la deuxième série est avantageusement également relié à une sortie de l'échangeur de cet échangeur de chaleur primaire, comme c'est le cas pour les oxybrûleurs de la première série. A nouveau, les oxybrûleurs de la deuxième série sont avantageusement reliés à la sortie de l'échangeur de chaleur primaire le plus proche dudit oxybrûleur. Dans ce cas, la première direction de la première série d'oxybrûleurs est de préférence parallèle à la deuxième direction de la deuxième série d'oxybrûleurs.

Un grand nombre de fours comporte des chambres rectangulaires, avec un mur amont, un mur aval à l'opposé du mur amont et deux murs latéraux reliant le mur amont et le mur aval. Ces murs latéraux correspondent aux côtés les plus longs du rectangle. Quand le four comporte deux séries d'oxybrûleurs dans des murs opposés de la chambre, les deux séries sont de préférence montées respectivement dans l'un et dans l'autre des murs latéraux.

Dans un four pour le traitement d'une charge qui se déplace à travers la chambre d'un côté à l'autre, comme par exemple les fours de fusion fonctionnant en continu, on introduit typiquement la charge dans la chambre à travers ou à proximité du mur amont et on évacue la charge traitée (par exemple la charge fondue) de la chambre à travers ou à proximité du mur aval.

Différents dispositifs de chauffage peuvent être utilisés pour le chauffage du fluide caloporteur aux moyens de fumées évacuées de la chambre en amont de l'échangeur de chaleur primaire. Suivant une forme de réalisation utile, ce dispositif de chauffage est un échangeur de chaleur, dit échangeur de chaleur secondaire ou échangeur secondaire, pour le chauffage du fluide caloporteur par échange thermique à travers une paroi avec des fumées évacuées de la chambre.

Le fluide caloporteur présente avantageusement une teneur en oxygène qui n'est pas supérieure à la teneur en oxygène de l'air. Le fluide caloporteur peut, par exemple, être de l'air, de l'azote ou du CO₂.

L'oxygène industriel présente avantageusement une teneur en oxygène supérieure à 70%, par exemple d'au moins 80% et de préférence d'au moins 90%.

Suivant un mode de réalisation utile, l'échangeur de chaleur primaire est un échangeur de chaleur tubulaire. Les sorties d'oxygène industriel préchauffé sont alors reliées à des tubes dudit échangeur tubulaire dans lesquelles l'oxygène industriel est préchauffé par échange thermique, à travers les parois des tubes, avec le fluide caloporteur chaud.

Un tel échangeur de chaleur tubulaire comporte avantageusement plusieurs faisceaux de tubes fluidiquement séparés l'un de l'autre, chaque faisceau de tubes étant relié à au moins une sortie d'oxygène industriel préchauffé et chaque sortie d'oxygène industriel préchauffé étant reliée à un seul faisceau de tubes. Par exemple, un faisceau de tubes peut fournir de l'oxygène industriel préchauffé à deux sorties d'oxygène industriel préchauffé de l'échangeur primaire, mais chacun desdites sorties sont reliées uniquement à ce faisceau de tubes et non pas à un des autres faisceaux de tubes.

De préférence, chaque faisceau de tubes est relié à pas plus de deux sorties d'oxygène industriel préchauffé, et encore de préférence, chaque faisceau de tubes est relié à une seule sortie d'oxygène industriel préchauffé, de manière à ce que le flux d'oxygène industriel préchauffé par un des faisceaux de tubes soit entièrement fourni à la sortie d'oxygène industriel préchauffé reliée audit faisceau de tubes.

Pour la répartition de l'oxygène industriel à préchauffer, l'échangeur de chaleur peut comporter plusieurs entrées d'oxygène industriel, par exemple, une entrée par faisceaux de tubes. Ceci est plus particulièrement le cas quand le diviseur est situé en amont de l'échangeur primaire.

Il est également possible de prévoir un capot d'entrée par faisceaux de tubes à l'intérieur de l'échangeur primaire, chaque capot d'entrée étant disposé pour la fourniture d'oxygène industriel à préchauffer à un seul faisceau de tubes. Lesdits capots d'entrée font alors partie d'un diviseur d'oxygène situé dans la zone amont de l'échangeur primaire.

De manière utile, chaque sortie d'oxygène industriel préchauffé de l'échangeur primaire tubulaire est reliée à un seul des faisceaux de tubes par le biais d'un capot de retour et d'un tuyau de retour, ledit tuyau de retour étant situé à l'intérieur de l'échangeur primaire. L'échangeur primaire comporte alors un capot de retour par faisceaux de tubes. Cette forme de réalisation est notamment utile quand les sorties de l'échangeur primaire sont positionnées le long de la dimension longitudinale de l'échangeur.

L'installation suivant l'invention comporte avantageusement également au moins un échangeur de combustible pour le préchauffage du combustible en amont d'oxybrûleurs de la chambre par échange thermique avec le fluide caloporteur chaud à travers une paroi. Cet échangeur est également appelé échangeur primaire de combustible. Ledit au moins un échangeur correspond avantageusement à l'une des formes de réalisation décrites ci-dessus à propos du ou des échangeurs primaires d'oxygène industriel (position, sorties, connections aux (séries d') oxybrûleurs, diviseur, structure, etc.) si ce n'est que le fluide préchauffé et fourni par ledit échangeur primaire de combustible est du combustible au lieu d'oxygène industriel.

La présente invention concerne également un procédé de combustion au moyen d'une installation selon l'invention suivant l'une quelconque des formes de réalisation décrites ci-dessus.

Selon ce procédé, on génère de la chaleur et des fumées dans la chambre au moyen des oxybrûleurs par combustion d'un combustible avec de l'oxygène industriel préchauffé comme comburant. Les fumées sont évacuées de la chambre par la sortie de fumées. Un fluide caloporteur est chauffé au moyen de fumées évacuées de la chambre dans le dispositif de chauffage de manière à obtenir un fluide caloporteur chaud. De l'oxygène industriel est préchauffé dans l'échangeur de chaleur primaire par échange thermique à travers une paroi avec du fluide caloporteur chaud, issu du dispositif de chauffage, de manière à obtenir de l'oxygène industriel préchauffé. Un flux de cet oxygène industriel préchauffé est amené vers chacune des sorties d'oxygène industriel préchauffé de l'échangeur primaire. Un flux d'oxygène industriel préchauffé est fourni à l'oxybrûleur relié à la sortie d'oxygène industriel préchauffé pour son utilisation comme comburant pour la combustion du combustible à l'intérieur de la chambre.

Suivant une forme de mise en oeuvre particulièrement intéressante, on réalise le procédé de combustion suivant l'invention dans un four de fusion de verre.

La présente invention concerne également les différentes formes de réalisation de l'échangeur de chaleur primaire tubulaire telles que décrites ci-dessus.

Ainsi, la présente invention concerne aussi un échangeur de chaleur tubulaire comportant plusieurs faisceaux de tubes fluidiquement séparés l'un de l'autre. Chacun desdits faisceaux de tubes est relié à au moins une sortie de l'échangeur pour l'évacuation d'un flux de fluide chauffé de l'échangeur, et chaque sortie de fluide chauffé est reliée à un seul faisceau de tubes.

L'échangeur tubulaire présente une dimension longitudinale qui correspond à la direction des faisceaux de tubes et comporte des sorties de fluide chauffé à différentes positions le long de cette dimension longitudinale.

Comme expliqué ci-dessus, lesdites positions sont choisies en fonction de la position d'au moins une série d'oxybrûleurs, voire de plusieurs séries d'oxybrûleurs, dans les murs de la chambre.

Comme décrit ci-dessus, pour la répartition du fluide à préchauffer, l'échangeur de chaleur peut comporter plusieurs entrées de fluide à chauffer, par exemple, une entrée par faisceaux de tubes.

Comme également décrit ci-dessus, il est également possible de munir l'échangeur de chaleur primaire tubulaire d'un capot d'entrée par faisceaux de tubes, chaque capot d'entrée étant disposé pour la fourniture de fluide à chauffer à un seul faisceau de tubes.

De manière utile, chaque sortie d'oxygène industriel préchauffé de l'échangeur primaire tubulaire est reliée à un des faisceaux de tubes par le biais d'un capot de retour et d'un tuyau de retour, ledit tuyau de retour étant situé à l'intérieur de l'échangeur. L'échangeur primaire comporte alors un capot de retour par faisceaux de tubes.

La présente invention et ses avantages sont illustrés par les exemples ci-après, références étant faites aux figures 1 à 4, dans lesquelles la figure 1 est une représentation schématique d'une installation suivant l'invention, la figure 2 est une représentation schématique en section transversale d'un échangeur de chaleur primaire tubulaire suivant l'invention. Les figures 3 et 4 sont des représentations schématiques d'une configuration possible de ces quatre faisceaux de tubes, respectivement du côté de l'entrée des tubes et du côté de la sortie des tubes.

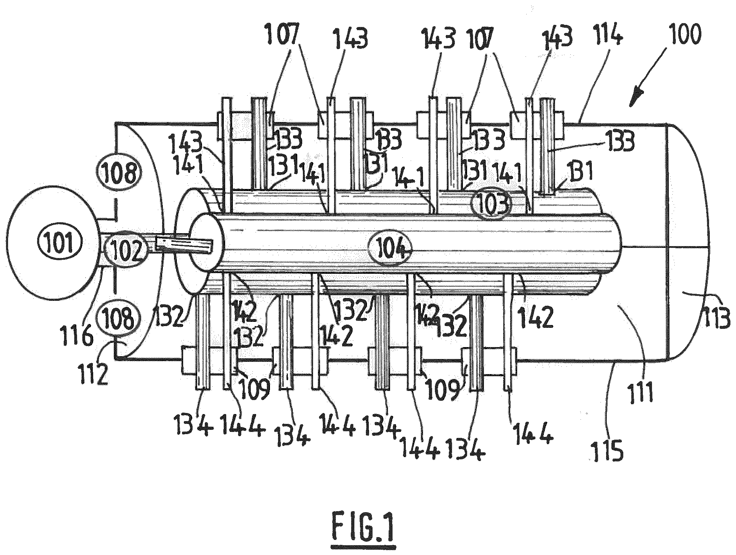

La figure 1 montre plus particulièrement une installation comportant un four de fusion de verre. La chambre 100 de ce four comporte une sole (non représentée), une voûte 111 et quatre murs 112 à 115, et plus particulièrement un mur amont 112, un mur aval 113 et deux murs latéraux 114 et 115.

Le four comporte huit oxybrûleurs 107, 109 montés dans les murs de la chambre 100. Une première série de quatre oxybrûleurs 107 est montée dans le premier mur latéral 114 et une deuxième série de quatre oxybrûleurs 109 est montée dans le deuxième mur latéral 115.

Les oxybrûleurs 107, 109 de chaque série sont espacés de manière régulière dans une direction horizontale parallèle à la longueur de la chambre 100. Les oxybrûleurs 107 de la première série et les oxybrûleurs 109 de la deuxième série sont plus particulièrement positionnés de manière à ce que, vu dans la longueur de la chambre 100, un oxybrûleur 107 de la première série se trouve entre deux oxybrûleurs 109 successifs de la deuxième série et vice-versa.

Les fumées générées par les oxybrûleurs 107, 109 sont évacuées de la chambre 100 à travers le mur amont 112 par l'unique sortie de fumées 116 et sont ensuite envoyées dans une cheminée (non illustrée). De la matière vitrifiable est introduite dans la chambre 100 à travers le mur amont 112, par deux enfourneuses 108. La matière fondue est évacuée de la chambre 100 par une ouverture de sortie (non illustrée) dans le mur aval 113 de la chambre 100.

Un seul récupérateur de chaleur 101 est utilisé comme dispositif de chauffage pour chauffer de l'air, utilisé comme fluide caloporteur, à partir de la chaleur de fumées évacuées de la chambre 100. Ce récupérateur de chaleur 101 est installé sur la cheminée de la chambre 100. Dans la forme de réalisation illustrée dans la figure 1, le récupérateur de chaleur 101 est ainsi installé du côté amont de la chambre 100.

L'air chaud ainsi produit est évacué du récupérateur 101 par la canalisation 102.

Un flux de cet air chaud est dirigé vers l'échangeur de chaleur primaire 103 qui est installé au-dessus de la chambre 100 à proximité de la voûte 111. L'échangeur 103 se trouve à distance égale des deux séries d'oxybrûleurs 107 et 109. La dimension longitudinale dudit échangeur primaire 103 est donc parallèle à l'axe longitudinal de la chambre 100.

A l'intérieur dudit échangeur primaire 103, de l'oxygène industriel est préchauffé par échange thermique à travers une paroi avec le fluide caloporteur chaud issu du récupérateur 101.

L'échangeur primaire 103 comporte huit sorties 131, 132 d'oxygène industriel préchauffé : quatre sorties 131 du côté de la première série de quatre oxybrûleurs 107 et quatre sorties 132 du côté des quatre oxybrûleurs 109 de la deuxième série. Chaque sortie 131, 132 est positionnée de manière à ce que la distance entre la sortie d'oxygène industriel préchauffé 131, 132 et l'oxybrûleur 107, 109 le plus proche soit minimale. Un conduit d'oxygène industriel préchauffé 133, 134 relie chaque sortie 131, 132 avec le brûleur 107, 109 le plus proche pour la fourniture d'oxygène industriel préchauffé en tant que comburant audit brûleur 107, 109. Grâce à la position des sorties 131, 132 par rapport aux brûleurs 107, 109, la longueur desdits conduits 133, 134 est minimale.

Un premier avantage de cette disposition est l'amélioration du rendement thermique de l'installation. En effet, l'environnement immédiat de l'échangeur primaire 103 et des conduits 133, 134 est la voûte chaude 111 et les pertes thermiques à travers le calorifugeage autour de l'échangeur primaire 103 et les conduits 133, 134 seront ainsi diminuées.

Un autre avantage est la double utilisation de l'échangeur primaire 103 : d'une part pour préchauffer l'oxygène industriel en amont des bruleurs 107, 109 et d'autre part, pour acheminer l'oxygène industriel préchauffé jusqu'en face de chaque brûleur.

En minimisant la distance entre les sorties de l'échangeur primaire 103 et les brûleurs 107, 109, les pertes thermiques dues à l'acheminement à travers les conduits calorifugé 133, 134 sont diminuées.

Du fait que chaque sortie 131, 132 est associée à un seul brûleur 107, 109, il n'est pas nécessaire de munir lesdits conduits 133, 134 de systèmes, tels que des vannes, pour la répartition de l'oxygène industriel préchauffé issu de ladite sortie 131, 132 vers plusieurs brûleurs.

Selon la forme de réalisation illustrée dans la figure 1, l'installation comporte également un échangeur de chaleur 104, dit échangeur primaire de combustible, pour le préchauffage du combustible en amont des brûleurs 107, 109, le combustible étant par exemple un combustible gazeux tel que le gaz naturel. Ce deuxième échangeur de chaleur 104 est positionné au-dessus de l'échangeur primaire 103.

Pour alimenter le deuxième échangeur 104 en air chaud, l'air chaud produit dans le récupérateur 101 est divisé en deux flux séparés, un premier flux qui est dirigé vers l'échangeur de chaleur primaire 103 et un deuxième flux qui est dirigé vers le deuxième échangeur 104.

Le deuxième échangeur 104 fonctionne selon les mêmes principes que l'échangeur primaire 103 et présente donc les mêmes avantages.

Ainsi, le deuxième échangeur 104 est installé à distance égale des deux séries d'oxybrûleurs 107 et 109. La dimension longitudinale du deuxième échangeur 104 est donc parallèle à l'axe longitudinal de la chambre 100.

Le deuxième échangeur 104 comporte huit sorties 141, 142 de combustible préchauffé : quatre sorties 141 du côté de la première série de quatre oxybrûleurs 107 et quatre sorties 142 du côté des quatre oxybrûleurs 109. Chaque sortie 141, 142 est positionnée de manière à ce que la distance entre la sortie de combustible préchauffé 141, 142 et l'oxybrûleur 107, 109 le plus proche soit minimale. Un conduit de combustible préchauffé 143, 144 relie chaque sortie 141, 142 avec le brûleur 107, 109 le plus proche pour la fourniture de combustible préchauffé audit brûleur 107, 109.

Suivant une forme de réalisation préférée de l'invention, l'échangeur primaire permet le préchauffage simultané de plusieurs flux d'oxygène industriel dont les débits peuvent être régulés indépendamment l'un de l'autre. Quand l'installation comporte également un deuxième échangeur pour le préchauffage du combustible, il est souhaitable que ce deuxième échangeur permette de manière analogue le préchauffage simultané de plusieurs flux de combustible dont les débits peuvent être régulés indépendamment l'un de l'autre. Il est par ailleurs souhaitable, pour des raisons de sécurité et de fiabilité, que ces débits puissent être régulés au niveau du réactif de combustion avant le préchauffage.

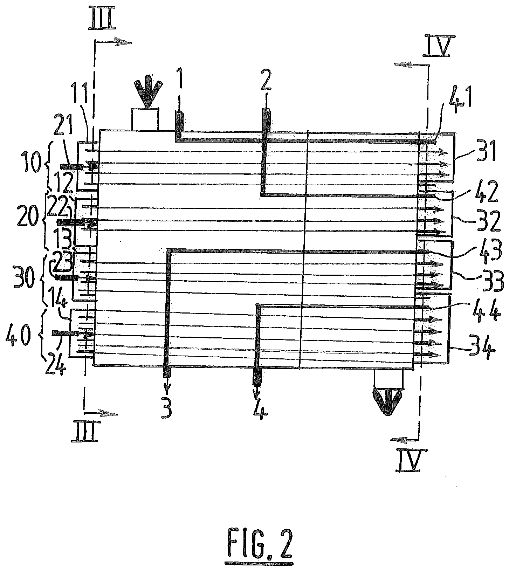

L'échangeur illustré dans la figure 2 est désigné de manière à permettre le préchauffage simultané de plusieurs flux de réactif(s) de combustion distincts. Ceci permet de réguler indépendamment le débit de chaque flux de réactif préchauffé et ainsi l'ajustement indépendant de la puissance de chaque brûleur. L'invention rend ainsi plus aisé l'obtention du profil thermique recherché dans la chambre et donne plus de flexibilité au four.

Comme illustré dans la figure 2, l'échangeur 103 est un échangeur tubulaire à plaques avec les caractéristiques suivantes :
- Les tubes sont divisés en plusieurs faisceaux dont le nombre correspond au nombre de flux distincts à préchauffer (quatre faisceaux 10, 20, 30 et 40 dans le cas illustré) ;
- Chaque faisceau 10, 20, 30, 40 est couvert par un capot 11 à 14, dit capot d'entrée, chaque capot d'entrée présentant une alimentation individuelle 21 à 24 en réactif de combustion ;
- A l'extrémité opposée des tubes, chaque faisceau 10, 20, 30, 40 est couvert par un capot 31 à 34, dit capot de retour, qui renvoie le réactif préchauffé issu du faisceau vers un ou plusieurs tubes de retour 41 à 44 exclusivement reliés audit faisceau ;
- Chaque tube de retour 41 à 44 achemine le réactif préchauffé vers une des sorties 1 à 4 de réactif préchauffé de l'échangeur, chaque sortie étant de préférence alimentée par un seul tube de retour 41 à 44 ;
- La longueur des tubes de retour 41 à 44 varie en fonction du positionnement de la sortie 1 à 4 correspondante, le positionnement de la sortie étant, comme décrit ci-dessus, fonction de la position du brûleur correspondant dans la chambre du four ;
- Le débit du réactif à préchauffer est régulé pour chaque faisceau de tubes 10, 20, 30 et 40 en amont du capot d'entrée 11 à 14, voire en amont de l'échangeur de chaleur, c'est-à-dire avant le préchauffage du réactif.

Le nombre des tubes par faisceau et leur diamètre est choisi de manière à assurer un préchauffage suffisant du réactif par échange thermique avec le fluide caloporteur chaud, typiquement de l'air chaud, tout en maintenant la pression et la vitesse maximale du réactif dans l'échangeur à un niveau qui ne dépasse pas les limites de sécurité.

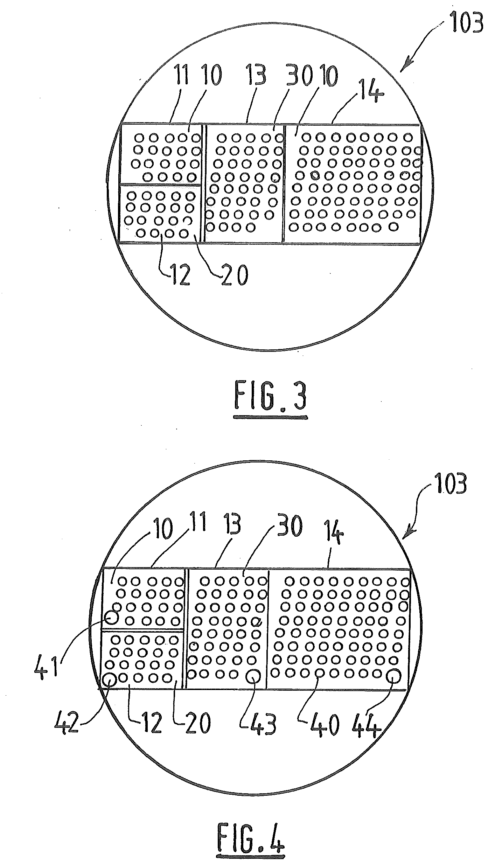

Les figures 3 et 4 représentent schématiquement une configuration possible pour quatre faisceaux de tubes 10, 20, 30 et 40 vue respectivement selon le plan III-III et selon le plan IV-IV de la figure 2.

On choisit, pour les capots 11 à 14 et 31 à 34, pour les tubes des faisceaux et pour les tubes de retour 41 à 44, et en général pour toute surface entrant en contact avec le réactif de combustion, des matériaux qui soient compatibles avec ces matériaux. Ainsi, pour les surfaces qui entrent en contact avec de l'oxygène préchauffé, on utilise de manière avantageuse un alliage contenant entre 60 et 75% de Ni, de 10 à 30% de Cr.

## Revendications

1. Installation comportant un four, ledit four comportant :
• une chambre (100) délimitée d'une part, par une sole et, d'autre part, par une enveloppe réfractaire, ladite enveloppe comportant des murs (112, 113, 114, 115) et une voûte (111), et ladite chambre (100) comportant une sortie de fumées (116), et
• entre quatre et vingt oxybrûleurs (107, 109) dirigés vers l'intérieur de la chambre (100), au moins une première série desdits oxybrûleurs (107) étant alignée dans un premier mur (114) de la chambre (100) selon une première direction,
ladite installation comportant également :
• un dispositif de chauffage (101) pour le chauffage d'un fluide caloporteur au moyen de fumées évacuées de la chambre (100) avec obtention de fluide caloporteur chaud, ledit dispositif de chauffage (101) étant relié à la sortie de fumées (116) de la chambre (100),
• un échangeur de chaleur primaire (103) pour le préchauffage d'oxygène industriel par échange thermique à travers une paroi avec le fluide caloporteur chaud de manière à obtenir de l'oxygène industriel préchauffé, ledit échangeur primaire (103) étant adjacent à l'enveloppe de la chambre (100) et relié au dispositif de chauffage (101) et comportant au moins une sortie d'oxygène industriel préchauffé (1, 2, 3, 4, 131, 132) pour la fourniture d'oxygène industriel préchauffé à au moins un des oxybrûleurs (107, 109)
**caractérisée :**
• **en ce que** l'installation comprend un diviseur pour la division de l'oxygène industriel à préchauffer en plusieurs flux d'oxygène à préchauffer, ledit diviseur étant positionné en amont de l'échangeur primaire ou dans une zone d'entrée d'oxygène à l'intérieur de l'échangeur primaire, et
• **en ce que** l'échangeur primaire comporte plusieurs sorties pour la fourniture d'un flux d'oxygène industriel préchauffé (1, 2, 3, 4, 131, 132), chaque oxybrûleur (107) de la première série étant relié à une sortie (1, 2, 3, 4, 131, 132) de l'échangeur de chaleur primaire (103) pour la fourniture d'un flux d'oxygène industriel préchauffé audit oxybrûleur (107), aucune sortie de l'échangeur primaire étant reliée à plusieurs oxybrûleurs.

2. Installation suivant la revendication 1, dans laquelle l'échangeur primaire (103) est adjacent au mur (114) comportant la première série d'oxybrûleurs (107).

3. Installation suivant l'une quelconque des revendications 1 et 2, dans laquelle, l'échangeur primaire (103) présente une dimension longitudinale parallèle à la direction de la première série d'oxybrûleurs et dans laquelle les sorties (131, 132) dudit échangeur primaire sont positionnées le long de cette dimension longitudinale, chaque oxybrûleur (107) de la première série étant relié à la sortie (131, 132) la plus proche de l'échangeur primaire (103).

4. Installation suivant l'une des revendications 1 à 3, dans laquelle le four est un four de fusion, le four comportant une deuxième série des oxybrûleurs (109) dans un deuxième mur (115) de la chambre (100) et alignés selon une deuxième direction, l'installation comportant :
• un deuxième échangeur de chaleur primaire pour le préchauffage d'oxygène industriel par échange thermique à travers une paroi avec le fluide caloporteur chaud de manière à obtenir de l'oxygène industriel préchauffé,
• un deuxième diviseur pour la division d'oxygène industriel à préchauffer en plusieurs flux d'oxygène à préchauffer,
**caractérisée en ce que** :
- ledit deuxième diviseur étant positionné en amont du deuxième l'échangeur primaire ou dans une zone d'entrée d'oxygène à l'intérieur du deuxième échangeur primaire,
- ledit deuxième échangeur primaire étant adjacent au mur (115) comportant la deuxième série d'oxybrûleurs (109), étant également relié au dispositif de chauffage (101) et comportant plusieurs sorties pour la fourniture d'un flux d'oxygène industriel préchauffé,
- chaque oxybrûleur (109) de la deuxième série étant relié à une seule sortie du deuxième échangeur primaire pour la fourniture d'un flux d'oxygène industriel préchauffé correspondant audit oxybrûleur, aucune sortie du deuxième échangeur primaire étant reliée à plusieurs oxybrûleurs.

5. Installation suivant la revendication 4, dans laquelle le deuxième échangeur primaire est adjacent au deuxième mur (115) comportant la deuxième série d'oxybrûleurs (109) et présente une dimension longitudinale parallèle à la direction de la deuxième série d'oxybrûleurs (109), les sorties dudit deuxième échangeur primaire étant positionnées le long de cette dimension longitudinale, chaque oxybrûleur (109) de la deuxième série étant relié à la sortie la plus proche du deuxième échangeur primaire.

6. Installation suivant la revendication 1, dans laquelle l'échangeur de chaleur primaire (103) est au-dessus de et adjacent à la voûte (111) de la chambre (100).

7. Installation suivant la revendication 6, dans laquelle le four comporte une deuxième série d'oxybrûleurs (109) alignés selon une deuxième direction dans un deuxième mur (115) de la chambre, ledit deuxième mur (115) étant à l'opposé du premier mur (114), chaque oxybrûleur (109) de la deuxième série étant relié à une sortie (132) d'oxygène industriel préchauffé de l'échangeur primaire (103) pour la fourniture d'un flux d'oxygène industriel préchauffé audit oxybrûleur (109) de la deuxième série.

8. Installation suivant l'une quelconque des revendications précédentes, dans laquelle le dispositif de chauffage (101) est un échangeur de chaleur secondaire pour le chauffage du fluide caloporteur par échange thermique à travers une paroi avec des fumées évacuées de la chambre.

9. Installation suivant l'une quelconque des revendications précédentes, dans laquelle l'échangeur primaire (103) est un échangeur de chaleur tubulaire, les sorties d'oxygène industriel préchauffé (131, 132) étant reliées à des tubes dudit échangeur de chaleur tubulaire.

10. Installation suivant la revendication 9, dans laquelle l'échangeur primaire (103) comporte plusieurs faisceaux de tubes (10, 20, 30, 40) fluidiquement séparés l'un de l'autre, chaque faisceau de tubes (10, 20, 30, 40) étant relié à au moins une des sorties (1, 2, 3, 4) de l'échangeur primaire (103) et chaque sortie (1, 2, 3, 4) étant reliée à un seul faisceau de tubes (10, 20, 30, 40), chaque faisceau de tubes (10, 20, 30, 40) étant de préférence relié à une seule sortie (1, 2, 3, 4).

11. Installation suivant la revendication 10, dans laquelle l'échangeur primaire (103) comporte un capot d'entrée (11, 12, 13, 14) par faisceau de tubes (10, 20, 30, 40), chaque capot d'entrée (11, 12, 13, 14) étant disposé pour la fourniture d'oxygène industriel à préchauffer à un seul faisceau de tubes (10, 20, 30, 40).

12. Installation suivant l'une des revendications 10 et 11, dans laquelle chaque sortie (1, 2, 3, 4) de l'échangeur primaire (103) est reliée à un faisceau de tubes (10, 20, 30, 40) par le biais d'un capot de retour (31, 32, 33, 34) et d'un tuyau de retour (41, 42, 43, 44), l'échangeur primaire (103) comportant un capot de retour (31, 32, 33, 34) par faisceaux de tubes (10, 20, 30, 40).

13. Installation suivant l'une quelconque des revendications précédentes, ladite installation comportant au moins un échangeur primaire de combustible (104) pour le préchauffage du combustible en amont des oxybrûleurs (107, 109) par échange thermique avec le fluide caloporteur chaud à travers une paroi, ledit échangeur primaire de combustible (104) étant adjacent à l'enveloppe de la chambre (100) et relié au dispositif de chauffage (101) et comportant plusieurs sorties pour la fourniture d'un flux de combustible préchauffé (141, 142) à des oxybrûleurs (107, 109) de l'installation, aucune sortie (141, 142) de l'échangeur primaire de combustible (104) étant reliée à plusieurs oxybrûleurs (107, 109), chaque sortie (141, 142) de l'échangeur primaire de combustible (104) étant de préférence reliée à un oxybrûleur (107, 109), l'installation comprenant de préférence un diviseur pour la division de combustible à préchauffer en plusieurs flux de combustible à préchauffer, ledit diviseur de combustible étant positionné en amont de l'échangeur primaire de combustible ou dans une zone d'entrée de combustible à l'intérieur de l'échangeur primaire de combustible.

14. Installation suivant l'une des revendications précédentes, dans laquelle le four est un four de fusion de verre.

15. Procédé de combustion au moyen d'une installation suivant l'une quelconque des revendications précédentes, procédé dans lequel :
• on génère de la chaleur et des fumées dans la chambre (100) au moyen des oxybrûleurs (107, 109) par combustion d'un combustible avec de l'oxygène industriel préchauffé comme comburant,
• on évacue les fumées de la chambre (100) par la sortie de fumées (116),
• on chauffe un fluide caloporteur au moyen de fumées évacuées de la chambre (100) dans le dispositif de chauffage (101) de manière à obtenir un fluide caloporteur chaud,
• on préchauffe de l'oxygène industriel dans le ou les échangeurs primaires (103) de l'installation par échange thermique à travers une paroi avec du fluide caloporteur chaud de manière à obtenir de l'oxygène industriel préchauffé,
• on amène un flux d'oxygène industriel préchauffé vers chacune des sorties (131, 132, 1, 2, 3, 4) du ou des échangeurs primaires (103) de l'installation et on fournit ce flux d'oxygène industriel préchauffé comme comburant à l'oxybrûleur (107, 109) relié à ladite sortie (131, 132, 1, 2, 3, 4).

## Patentansprüche

1. Anlage mit Ofen, wobei dieser Ofen aus Folgendem besteht:
• einer Kammer (100), die einerseits durch einen Ofenboden und andererseits durch eine feuerfeste Auskleidung begrenzt wird und Wände (112, 113, 114, 115) sowie ein Gewölbe (111) umfasst, wobei sich in der Kammer (100) die Rauchabzüge (116) befinden sowie
• zwischen vier und zwanzig Sauerstoffbrenner (107, 109) die ins Innere der Kammer (100) gerichtet sind, wobei mindestens eine Reihe der Sauerstoffbrenner (107) in einer ersten Wand (114) der Kammer (100) entsprechend einer ersten Richtung aufgereiht ist,
wobei die Anlage ebenfalls umfasst:
• ein Heizgerät (101) zum Beheizen der Wärmeträgerflüssigkeit mittels des Rauchs aus der Kammer (100) zur Herstellung einer heißen Wärmeträgerflüssigkeit, wobei das Heizgerät (101) verbunden mit dem Rauchabzug (116) der Kammer (100) ist, und
• einem primären Wärmetauscher (103) zum Vorheizen von industriellem Sauerstoff durch Wärmetausch durch eine Wand mit Wärmeträgerflüssigkeit, sodass vorgeheizter industrieller Sauerstoff entsteht, der primärer Tauscher (103) grenzt an die Auskleidung der Kammer (100), ist mit dem Heizgerät (101) verbunden und verfügt mindestens über einen Ausgang für vorgeheizten industriellen Sauerstoff (1, 2, 3, 4, 131, 132) zur Versorgung von mindestens einem Sauerstoffbrenner (107, 109) mit industriellem Sauerstoff, wobei sie **dadurch gekennzeichnet ist, dass**:
• die Anlage über einen Teiler zur Teilung des zu beheizenden industriellen Sauerstoffs in mehrere zu beheizende Sauerstoffströme verfügt, wobei der Teiler dem primären Tauscher vorgelagert ist bzw. sich im Bereich des Sauerstoffzuflusses im Innern des primären Tauschers befindet und
• der primäre Tauscher mehrere Ausgänge zur Versorgung mit vorgeheiztem industriellem Sauerstoff (1, 2, 3, 4, 131, 132) umfasst, wobei jeder Sauerstoffbrenner (107) der ersten Serie mit einem Ausgang (1, 2, 3, 4, 131, 132) des primären Wärmetauschers (103) zur Versorgung mit einem vorgeheizten industriellen Sauerstoffstrom des Sauerstoffbrenners (107) verbunden ist, wobei kein Ausgang des primären Tauschers mit mehreren Sauerstoffbrennern verbunden ist.

2. Anlage nach Anspruch 1, wobei der primäre Tauscher (103) an der Wand (114) liegt und eine erste Reihe an Sauerstoffbrennern (107) umfasst.

3. Anlage nach einem der Ansprüche 1 oder 2, wobei der primäre Tauscher (103) ein Längsmaß parallel zur Richtung der ersten Reihe der Sauerstoffbrenner aufweist und in dem die Ausgänge (131, 132) des primären Tauschers sich entlang dieses Längsmaßes befinden, wobei jeder Sauerstoffbrenner (107) der ersten Reihe mit dem nächstliegenden Ausgang (131, 132) des primären Tauschers (103) verbunden ist.

4. Anlage nach einem der Ansprüche 1 bis 3, wobei der Ofen ein Fusionsofen ist, wobei der Ofen eine zweite Sauerstoffbrennerreihe (109) in einer zweiten Wand (115) der Kammer (100) umfasst und auf eine zweite Richtung ausgerichtet ist, wobei die Anlage Folgendes umfasst:
• einen zweiten primären Wärmetauscher zum Vorheizen von industriellen Sauerstoff mit Wärmetausch durch eine Wand mit warmer Wärmeträgerflüssigkeit zur Herstellung von vorgeheiztem industriellen Sauerstoff,
• einen zweiten Teiler zur Teilung von zu beheizendem industriellen Sauerstoff in mehrere zu beheizende Sauerstoffströme,
wobei sie **dadurch gekennzeichnet ist, dass**:
- der zweite Teiler sich vor dem zweiten primären Tauscher bzw. in einem Bereich der Sauerstoffzufuhr ins Innere des zweiten primären Tauschers befindet,
- der zweite primäre Tauscher an die Wand (115) mit der zweiten Sauerstoffbrennerreihe (109) grenzt, wobei dieser auch verbunden mit dem Heizgerät (101) ist und über mehrere Ausgänge zur Versorgung mit einem vorgeheizten industriellen Sauerstoffstrom verfügt.
- jeder Sauerstoffbrenner (109) der zweiten Reihe mit einem einzigen Ausgang des zweiten primären Tauschers zur Versorgung mit einem vorgeheizten industriellen Sauerstoffstrom verbunden ist, der dem Sauerstoffbrenner entspricht, wobei kein Ausgang des zweiten primären Tauschers mit mehreren Sauerstoffenbrennern verbunden ist.

5. Anlage nach Anspruch 4, wobei der zweite primäre Tauscher an die zweite Wand (115) grenzt und über die zweite Reihe der Sauerstoffbrenner (109) verfügt und ein Längsmaß parallel zur Richtung der zweiten Reihe Sauerstoffbrenner (109) verfügt, wobei sich die Ausgänge des zweiten primären Tauschers entlang dieses Längsmaßes befindet und jeder Sauerstoffbrenner (109) der zweiten Reihe mit dem nächstgelegenen Ausgang des zweiten primären Tauschers verbunden ist.

6. Anlage nach Anspruch 1, wobei der primäre Wärmetauscher (103) sich über dem und angrenzend an das Gewölbe (111) der Kammer (100) befindet.

7. Anlage nach Anspruch 6, wobei der Ofen über eine zweite Reihe von Sauerstoffbrennern (109) verfügt, die in einer zweiten Wand (115) gemäß einer zweiten Richtung ausgerichtet sind, wobei die zweite Wand (115) sich am gegenüberliegenden Ende im Verhältnis zur ersten Wand (114) befindet, wobei jeder Sauerstoffbrenner (109) der zweiten Reihe mit einem Ausgang (132) für vorgeheizten industriellen Sauerstoff des primären Tauschers (103) zur Versorgung des Sauerstoffbrenners (109) der zweiten Reihe mit einem vorgeheizten industriellen Sauerstoffstrom verbunden ist.

8. Anlage nach einem der vorstehenden Ansprüche, wobei das Heizgerät (101) ein sekundärer Wärmetauscher zur Beheizung der Wärmeträgerflüssigkeit mittels Wärmetausch durch eine Wand mit aus der Kammer geleitetem Rauch ist.

9. Anlage nach einem der vorstehenden Ansprüche, wobei der primäre Tauscher (103) ein Röhren-Wärmetauscher ist, wobei die vorgeheizten industriellen Sauerstoffausgänge (131, 132) mit den Röhren des Röhren-Wärmetauschers verbunden sind.

10. Anlage nach Anspruch 9, wobei der primäre Tauscher (103) mehrere Rohrbündel (10, 20, 30, 40) umfasst, die jeweils durch einen Strom getrennt sind, wobei jedes Rohrbündel (10, 20, 30, 40) mit mindestens einem der Ausgänge (1, 2, 3, 4) des primären Tauschers (103) verbunden ist und jeder Ausgang (1, 2 ,3, 4) nur mit einem Rohrbündel (10, 20, 30, 40) verbunden ist, wobei jedes Rohrbündel (10, 20, 30, 40) vorzugsweise mit einem einzigen Ausgang (1, 2, 3, 4) verbunden ist.

11. Anlage nach Anspruch 10, wobei der primäre Tauscher (103) über eine Einlasshaube (11, 12, 13, 14) durch Rohrbündel (10, 20, 30, 40) verfügt, wobei jede Einlasshaube (11, 12, 13, 14) darauf ausgelegt ist, ein einziges Rohrbündel (10, 20, 30, 40) mit vorzuheizendem industriellem Sauerstoff zu versorgen.

12. Anlage nach Ansprüche 10 und 11, wobei jeder Ausgang (1, 2, 3, 4) des primären Tauschers (103) mit einem Rohrbündel (10, 20, 30, 40) durch eine Rückschlaghaube (31, 32, 33, 34) und ein Rückschlagrohr (41, 42, 43, 44) verbunden ist, wobei der primäre Tauscher (103) eine Rückschlaghaube (31, 32, 33, 34) mit Rohrbündel (10, 20, 30, 40) umfasst.

13. Anlage nach einem der vorstehenden Ansprüche, wobei die Anlage mindestens einen Primär-Kraftstofftauscher (104) zum Vorheizen des Kraftstoffs vor den Sauerstoffbrennern (107, 109) umfasst, die durch Wärmetausch mit einer Wärmeträgerflüssigkeit durch eine Wand erfolgt, wobei der primäre Kraftstofftauscher (104) an die Auskleidung der Kammer (100) grenzt und mit dem Heizgerät (101) verbunden ist und über mehrere Ausgänge zur Versorgung der Sauerstoffbrenner (107, 109) der Anlage mit vorgeheiztem Kraftstoffstrom (141, 142) verfügt, wobei kein Ausgang (141, 142) des primären Kraftstofftauschers (104) mit mehreren Sauerstoffbrennern (107, 109) verbunden ist und jeder Ausgang (141, 142) zum primären Kraftstofftauscher (104) vorzugsweise mit einem Sauerstoffbrenner (107, 109) verbunden ist, wobei die Anlage vorzugsweise einen Teiler für die Teilung des vorzuheizenden Kraftstoffs in mehrere vorzuheizende Kraftstoffströme umfasst, wobei der Kraftstoffteiler sich vor dem primären Kraftstofftauscher oder in einem Eingangsbereich für Kraftstoff im Innern des primären Kraftstofftauschers befindet.

14. Anlage nach einem der vorstehenden Ansprüche, wobei der Ofen ein Glasfusionsofen ist.

15. Verbrennungsverfahren mittels einer Anlage nach einem der vorstehenden Ansprüche mit folgendem Verfahren:
• man generiert Wärme und Rauch in der Kammer (100) mittels Sauerstoffbrennern (107, 109) durch Verbrennung des Kraftstoffs mit vorgeheiztem industriellem Sauerstoff als Brennstoff,
• man leitet den Rauch aus der Kammer (100) durch den Rauchabzug (116) ab,
• man erhitzt die Wärmeträgerflüssigkeit mittels des aus der Kammer (100) abgeleiteten Rauchs im Heizgerät (101), sodass man eine heiße Wärmeträgerflüssigkeit erhält,
• man erhitzt industriellen Sauerstoff im oder in den primären Tauscher (103) der Anlage durch Wärmetausch durch eine Wand mit heißer Wärmeträgerflüssigkeit, sodass man vorgeheizten industriellen Sauerstoff erhält,
• man leitet zu jedem der Ausgänge (131, 132, 1, 2, 3, 4) des oder der primären Tauscher (103) der Anlage einen vorgeheizten industriellen Sauerstoffstrom als Brennstoff zum Sauerstoffbrenner (107, 109), welcher mit besagtem Ausgang (131, 132, 1, 2, 3, 4) verbunden ist.

## Claims

1. Installation comprising a furnace, said furnace comprising:
• a chamber (100) defined on the one hand, by a floor and, on the other hand, by a refractory jacket, said jacket comprising walls (112, 113, 114, 115) and a vault (111), and said chamber (100) comprising a smoke outlet (116), and
• between four and twenty oxygen burners (107, 109) directed towards the inside of the chamber (100), at least one first series of said oxygen burners (107) being aligned in a first wall (114) of the chamber (100) along a first direction,
said installation also comprising:
• a heating device (101) to heat a heat-transfer fluid by means of smoke released from the chamber (100) obtaining hot heat-transfer fluid, said heating device (101) being connected to the smoke outlet (116) of the chamber (100),
• a primary heat exchanger (103) to preheat industrial oxygen by heat exchange through a wall with the hot heat-transfer fluid so as to obtain the preheated industrial oxygen, said primary exchanger (103) being adjacent to the jacket of the chamber (100) and connected to the heating device (101) and comprising at least one preheated industrial oxygen outlet (1, 2, 3, 4, 131, 132) to provide preheated industrial oxygen to at least one of the oxygen burners (107, 109), **characterised:**
• **in that** the installation comprises a splitter to split the industrial oxygen to be preheated into several oxygen flows to be preheated, said splitter being positioned upstream of the primary exchanger or in an oxygen inlet zone inside the primary exchanger, and
• **in that** the primary exchanger comprises several outlets to provide a preheated industrial oxygen flow (1, 2, 3, 4, 131, 132),
each oxygen burner (107) of the first series being connected to an outlet (1, 2, 3, 4, 131, 132) of the primary heat exchanger (103) to provide a preheated industrial oxygen flow to said oxygen burner (107), no outlet of the primary exchanger being connected to several oxygen burners.

2. Installation according to claim 1, wherein the primary exchanger (103) is adjacent to the wall (114) comprising the first series of oxygen burners (107).

3. Installation according to any one of claims 1 and 2, wherein the primary exchanger (103) has a longitudinal dimension parallel to the direction of the first series of oxygen burners and wherein the outlets (131, 132) of said primary exchanger are positioned along this longitudinal dimension, each oxygen burner (107) of the first series being connected to the outlet (131, 132) closest to the primary exchanger (103).

4. Installation according to one of claims 1 to 3, wherein the furnace is a smelting furnace, the furnace comprising a second series of oxygen burners (109) in a second wall (115) of the chamber (100) and aligned along a second direction,
the installation comprising:
• a second primary heat exchanger to preheat industrial oxygen by heat exchange through a wall with the hot heat-transfer fluid so as to obtain preheated industrial oxygen,
• a second splitter to split industrial oxygen to be preheated into several oxygen flows to be preheated,
**characterised in that**:
- said second splitter being positioned upstream of the second primary exchanger or in an oxygen inlet zone inside the second primary exchanger,
- said second primary exchanger being adjacent to the wall (115) comprising the second series of oxygen burners (109), also being connected to the heating device (101) and comprising several outlets to provide a preheated industrial oxygen flow,
- each oxygen burner (109) of the second series being connected to one single outlet of the second primary exchanger to provide a preheated industrial oxygen flow corresponding to said oxygen burner, no outlet of the second primary exchanger being connected to several oxygen burners.

5. Installation according to claim 4, wherein the second primary exchanger is adjacent to the second wall (115) comprising the second series of oxygen burners (109) and has a longitudinal dimension parallel to the direction of the second series of oxygen burners (109), the outlets of said second primary exchanger being positioned along this longitudinal dimension, each oxygen burner (109) of the second series being connected to the outlet closest to the second primary exchanger.

6. Installation according to claim 1, wherein the primary heat exchanger (103) is above and adjacent to the vault (111) of the chamber (100).

7. Installation according to claim 6, wherein the furnace comprises a second series of oxygen burners (109) aligned along a second direction in a second wall (115) of the chamber, said second wall (115) being opposite the first wall (114), each oxygen burner (109) of the second series being connected to a preheated industrial oxygen outlet (132) of the primary exchanger (103) to provide a preheated industrial oxygen flow to said oxygen burner (109) of the second series.

8. Installation according to any one of the preceding claims, wherein the heating device (101) is a secondary heat exchanger to heat the heat-transfer fluid by heat exchange through a wall with smoke released from the chamber.

9. Installation according to any one of the preceding claims, wherein the primary exchanger (103) is a tubular heat exchanger, the preheated industrial oxygen outlets (131, 132) being connected to the tubes of said tubular heat exchanger.

10. Installation according to claim 9, wherein the primary exchanger (103) comprises several tube clusters (10, 20, 30, 40) fluidly separated from each other, each tube cluster (10, 20, 30, 40) being connected to at least one of the outlets (1, 2, 3, 4) of the primary exchanger (103) and each outlet (1, 2, 3, 4) being connected to one single tube cluster (10, 20, 30, 40), each tube cluster (10, 20, 30, 40) preferably being connected to one single outlet (1, 2, 3, 4).

11. Installation according to claim 10, wherein the primary exchanger (103) comprises one inlet cap (11, 12, 13, 14) per tube cluster (10, 20, 30, 40), each inlet cap (11, 12, 13, 14) being arranged to provide industrial oxygen to be preheated to one single tube cluster (10, 20, 30, 40).

12. Installation according to one of claims 10 and 11, wherein each outlet (1, 2, 3, 4) of the primary exchanger (103) is connected to a tube cluster (10, 20, 30, 40) by means of a return cap (31, 32, 33, 34) and a return pipe (41, 42, 43, 44), the primary exchanger (103) comprising one return cap (31, 32, 33, 34) per tube cluster (10, 20, 30, 40).

13. Installation according to any one of the preceding claims, said installation comprising at least one primary fuel exchanger (104) to preheat fuel upstream of the oxygen burners (107, 109) by heat exchange with the hot heat-transfer fluid through a wall, said primary fuel exchanger (104) being adjacent to the jacket of the chamber (100) and connected to the heating device (101) and comprising several outlets to provide a preheated fuel flow (141, 142) to the oxygen burners (107, 109) of the installation, no outlet (141, 142) of the primary fuel exchanger (104) being connected to several oxygen burners (107, 109), each outlet (141, 142) of the primary fuel exchanger (104) preferably being connected to an oxygen burner (107, 109), the installation preferably comprising a splitter to split fuel to be preheated into several fuel flows to be preheated, said fuel splitter being positioned upstream of the primary fuel exchanger or in a fuel inlet zone inside the primary fuel exchanger.

14. Installation according to one of the preceding claims, wherein the furnace is a glass smelting furnace.

15. Method for combusting by means of an installation according to any one of the preceding claims, method wherein:
• heat and smoke are generated in the chamber (100) by means of oxygen burners (107, 109) by combusting a fuel with preheated industrial oxygen as a combustion agent
• smoke is released from the chamber (100) through the smoke outlet (116),
• a heat-transfer fluid is heated by means of smoke released from the chamber (100) into the heating device (101) so as to obtain a hot heat-transfer fluid,
• the industrial oxygen is preheated in the primary exchanger(s) (103) of the installation by heat exchange through a wall with the hot heat-transfer fluid so as to obtain preheated industrial oxygen,
• a preheated industrial oxygen flow is created towards each one of the outlets (131, 132, 1, 2, 3, 4) of the primary exchanger(s) (103) of the installation and this preheated industrial oxygen flow is provided as a combustion agent to the oxygen burner (107, 109) connected to said outlet (131, 132, 1, 2, 3, 4).
